# EUROPÄISCHE PATENTSCHRIFT

(11) **EP 4 378 763 B1**
(45) Veröffentlichungstag und Bekanntmachung des Hinweises auf die Patenterteilung: **31.12.2025**
(21) Anmeldenummer: 23213305.8
(22) Anmeldetag: 30.11.2023
(51) Int. Cl.: B60R 21/02, B60J 1/20

(54) **FREIZEITFAHRZEUG UND ANORDNUNG ZUR REALISIERUNG EINES HERAUSFALLSCHUTZES AN EINEM FENSTER**
RECREATIONAL VEHICLE AND ARRANGEMENT FOR REALIZING A FALL PROTECTION ON A WINDOW
VÉHICULE DE LOISIRS ET DISPOSITIF DE REALISATION POUR LA PROTECTION CONTRE UNE CHUTE D'UNE FENÊTRE

(30) Priorität: 30.11.2022 DE 102022131822
(43) Veröffentlichungstag der Anmeldung: 05.06.2024
(73) Patentinhaber: Bürstner GmbH & CO. KG, 77694 Kehl (DE)
(72) Erfinder: Gockel, Timo, 77694 Kehl-Auenheim (DE); Bittner, Alexander, 77656 Offenburg (DE)
(74) Vertreter: Müller Schupfner & Partner Patent- und Rechtsanwaltspartnerschaft mbB (Muc)

(56) Entgegenhaltungen:
- DE-U1- 8 507 949
- JP-A- S6 346 948
- US-A- 2 892 495
- US-A- 4 653 562
- US-A- 4 854 364
- US-B1- 7 832 455

## Beschreibung

Die Erfindung betrifft ein Freizeitfahrzeug und eine Anordnung für ein Freizeitfahrzeug, wobei an einem Fenster des Freizeitfahrzeugs ein Herausfallschutzelement vorgesehen ist, so dass im Bettbereich am Fenster ein Herausfallschutz gegen Herausfallen realisiert ist. Speziell betrifft die Erfindung das Gebiet der Wohnmobile und Wohnwagen.

Bei einem Freizeitfahrzeug, wie einem Wohnmobil und einem Wohnwagen, kann ein herausnehmbarer Herausfallschutz gewährleistet werden, indem im Bettbereich Sperrholzplatten oder MDF-Platten zwischen Seitenwand und Matratze geklemmt werden. Somit ist einerseits im Bettbereich am Fenster ein Herausfallschutz gegeben und andererseits wird gewährleistet, dass das Fenster eine Fluchtmöglichkeit als Fluchtweg darstellt, da der Herausfallschutz herausnehmbar ist.

Der bekannte Herausfallschutz in Form einer Platte hat mehrere Nachteile. Zunächst hat eine herausnehmbare Platte keinen bestimmten Aufbewahrungsort im Freizeitfahrzeug. Zum anderen ist einem Kunden die Funktion einer als Herausfallschutz dienenden Platte oftmals nicht klar, so dass sie selten genutzt wird. Ferner sind als Herausfallschutz dienende Platten aufwändig und teuer in der Herstellung.

DE 85 07 949 U1 beschreibt eine abnehmbare Innenschutzabdeckung für serienmäßige Fensteröffnungen in Vordertüren von Kraftfahrzeugen. Die Innenschutzabdeckung kann aus einem Moskitonetzgewebe bestehen, das von einem Besatz eingefasst ist, der mit Druckknopfoberteilen sowie einem Klettbandteil eines Klettbandverschlusses versehen ist.

US 7 832 455 B1 beschreibt ein Sicherheitsgitter für Fahrzeugfenster mit einem ersten Rahmen mit einem ersten Gitter und einen zweiten Rahmen mit einem zweiten Gitter, die verstellbar miteinander verbunden sind. Die Rahmen können jeweils eine Rippe umfassen, die in einen Fensterkanal einer Tür eines Fahrzeugs passen.

Aufgabe der Erfindung ist es, eine Anordnung für ein Freizeitfahrzeug und ein Freizeitfahrzeug, insbesondere ein Wohnmobil oder einen Wohnwagen, anzugeben, die eine verbesserte Ausgestaltung und Funktionsweise ermöglichen. Speziell ist es eine Aufgabe, eine Anordnung und ein Freizeitfahrzeug anzugeben, wobei der Herausfallschutz kostengünstig ist und/oder in verbesserter Weise an einem Lagerplatz aufbewahrt werden kann und/oder eine intuitive Funktionsweise für einen Benutzer hat und/oder eine geringe Masse und somit ein geringeres Gewicht hat.

Die Aufgabe wird durch eine Anordnung mit den Merkmalen des unabhängigen Patentanspruchs 1 und durch ein Freizeitfahrzeug mit den Merkmalen des Patentanspruchs 8 gelöst. Vorteilhafte Weiterbildungen der Erfindung sind in den Unteransprüchen angegeben.

Die Aufgabe wird durch eine Anordnung für ein Freizeitfahrzeug, insbesondere ein Wohnmobil oder einen Wohnwagen, mit zumindest einem Herausfallschutzelement, das entfernbar an einem Fenster des Freizeitfahrzeugs anordenbar ist, gelöst, wobei das zumindest eine Herausfallschutzelement so ausgestaltet ist, dass im an dem Fenster angeordneten Zustand ein Herausfallschutz an dem Fenster realisiert ist, wobei ein erstes Halteelement und zumindest ein zweites Halteelement vorgesehen sind, wobei das erste Halteelement im montierten Zustand neben einer ersten Seite des Fensters an einer Wand des Freizeitfahrzeugs befestigt ist, wobei das zweite Halteelement im montierten Zustand an einer der ersten Seite des Fensters gegenüber liegenden zweiten Seite des Fensters an einer Wand des Freizeitfahrzeugs befestigt ist und wobei zumindest ein Herausfallschutzelement im an dem Fenster angeordneten Zustand durch das erste Halteelement und das zweite Halteelement gehalten ist.

Ferner wird die Aufgabe durch ein Freizeitfahrzeug, insbesondere ein Wohnmobil oder einen Wohnwagen, mit zumindest einer solchen Anordnung gelöst.

Vorteilhaft ist es, dass das zumindest eine Herausfallschutzelement als zumindest im Wesentlichen stangenförmiges Herausfallschutzelement ausgebildet ist. Dadurch ist die Handhabung des Herausfallschutzelements besonders einfach. Außerdem kann das Herausfallschutzelement dadurch platzsparend gelagert werden.

Vorteilhaft ist es auch, dass zumindest zwei Herausfallschutzelemente vorgesehen sind. Hierdurch kann ein wirksamer Herausfallschutz mit geringem Gewicht realisiert werden. Außerdem kann gegebenenfalls ein Lichteinfall beziehungsweise eine Sicht aus dem Fenster verbessert werden.

Vorteilhaft ist es, dass das zumindest eine Herausfallschutzelement als zumindest im Wesentlichen biegesteifes Herausfallschutzelement ausgebildet ist. Dadurch kann eine hohe Sicherheit der Anordnung realisiert werden. Dadurch werden Personenschäden wirksam verhindert.

Erfindungsgemäß ist es, dass das erste Halteelement und/oder das zweite Halteelement zumindest eine Ausnehmung aufweist, in die das zumindest eine Herausfallschutzelement einclipsbar ist. Dadurch kann ein einfaches Einsetzen und Entfernen des Herausfallschutzelements ermöglicht werden.

Erfindungsgemäß ist es, dass die Ausnehmung im montierten Zustand des Halteelements zumindest an einer dem Fenster zugewandten Seite des Halteelements und an einer der Wand abgewandten Seite des Halteelements geöffnet ist. Dadurch ist ein einfaches Anbringen und Entfernen des Herausfallschutzelements möglich.

Vorteilhaft ist es auch, dass die Ausnehmung auf einer zumindest im Wesentlichen als Bohrung, insbesondere Sacklochbohrung, ausgestalteten Verschneidungsform basiert. Dadurch kann das Herausfallschutzelement unabhängig von seiner Orientierung bezüglich seiner Längsachse angebracht werden, was die Handhabung für den Benutzer vereinfacht. Speziell bei einer Ausgestaltung der Ausnehmung als Sacklochbohrung besteht der Vorteil, dass das Herausfallschutzelement entlang seiner Längsachse gegen ein zu weiteres Verstellen blockiert werden kann.

Vorteilhaft ist es, dass das Haltelement auf einer quaderförmigen Grundform basiert. Hierdurch ist eine kompakte Ausgestaltung möglich.

Vorteilhaft ist es, dass das Halteelement eine im montierten Zustand des Halteelements der Wand zugewandte Befestigungsseite aufweist und dass das Halteelement zur Montage an der Wand zur Befestigungsseite zumindest ein Befestigungselement, insbesondere einen Spreizdübel, aufweist. Hierdurch ist eine zuverlässige und belastbare Befestigung möglich.

Vorteilhaft ist es, dass das Halteelement zumindest eine Durchgangsbohrung aufweist, die sich im montierten Zustand des Halteelement von einer der Wand abgewandten Seite des Halteelements zu einer der Wand zugewandten Seite des Halteelements erstreckt. Die Durchgangsbohrung kann dann beispielsweise zur Durchführung einer Schraube dienen, mit der das Halteelement an der Wand des Freizeitfahrzeugs fixiert werden kann.

In vorteilhafter Weise ist das Haltelement als Spritzgussteil ausgebildet. Hierdurch ist eine kostengünstige Herstellung aus einem kostengünstigen Werkstoff möglich. Hierdurch ist auch eine leichte Ausgestaltung möglich. Vorteilhaft ist es auch, dass das Halteelement als werkzeugfallendes Teil ausgeführt ist. Hierdurch wird die Herstellung weiter vereinfacht.

Speziell bei einer Ausgestaltung als Freizeitfahrzeug ist es vorteilhaft, dass eine Aufenthaltsfläche, insbesondere eine Liegefläche, an dem Fenster vorgesehen ist, an dem das zumindest eine Herausfallschutzelement der Anordnung entfernbar angeordnet ist. Hierdurch kann beispielsweise für ein Bett ein zuverlässiger Herausfallschutz realisiert werden. Dadurch können auch gesetzliche Sicherheitsvorschriften in vorteilhafter Weise erfüllt werden.

Die Anordnung eignet sich in besonderer Weise zur Realisierung eines Herausfallschutzes für das Freizeitfahrzeug an einem Fenster. Die Anordnung kann allerdings in nicht abgewandelter oder abgewandelter Form auch als Herausfallstutz für einen Stauschrank dienen. Hierbei kann die Anordnung gewissermaßen einen Reling-Halter realisieren, um eine Seite des Stauschranks ganz oder teilweise mit einem oder mehreren Herausfallschutzelementen zu versehen, um beispielsweise transportierte Güter des Freizeitfahrzeugs während einer Fahrt oder auch im Stand zu sichern. Hierauf kann auch ein unabhängiger Patentanspruch gerichtet werden.

Je nach Ausgestaltung können ein oder mehrere der folgenden Vorteile realisiert werden. Durch die feste Installation kann der Aufbewahrungsort klar vorgegeben sein. Durch die feste Installation der Halteelemente ist die Funktion der Anordnung für den Kunden klar gegeben.

Speziell bei einer Ausgestaltung als werkzeugfallendes Teil ist eine Standardisierung möglich, die auch für mehrere oder alle Baureihen eines Freizeitfahrzeugs beibehalten werden kann. Dadurch können Kosten gespart werden. Die Anordnung kann in einfacher Weise an verschiedene Anwendungsfälle, insbesondere Fensterbreiten, angepasst werden. Speziell können hierbei die Herausfallschutzelemente auf einem Profil basieren, das in entsprechenden Längen zugeschnitten wird. Ferner ist eine Gewichtseinsparung speziell bei einer Ausgestaltung der Haltelemente als Spritzgussteile und/oder der Herausfallschutzelemente auf der Basis eines Profils möglich. Besonders vorteilhaft ist hierbei eine Kombination dieser beiden Ausgestaltungen.

Bei einer möglichen Ausgestaltung kann jeweils ein Halteelement links und rechts beziehungsweise an einer und an einer anderen Seite des Fensters an der Wand, insbesondere Seitenwand, des Freizeitfahrzeugs montiert werden. Zur Montage können Spreizdübel und ein Verschrauben zum Einsatz kommen. In die Halteelemente kann dann zumindest ein Herausfallschutzelement in Form eines biegesteifen Profils eingeclipst werden. Dadurch kann ein Herausfallschutz realisiert werden, der beispielsweise normgerechte Belastungen aufnimmt. Ferner kann vorzugsweise jedes Herausfallschutzelement mit einem Handgriff des Benutzers entfernt werden, um so den Fluchtweg durch das Fenster zu gewährleisten und eine entsprechende Norm beziehungsweise gesetzliche Vorgabe zu erfüllen.

Weitere Vorteile und Einzelheiten der Erfindung werden anhand des in der schematischen Figur dargestellten Ausführungsbeispiels näher erläutert. Hierbei zeigen:
- Fig. 1: ein Freizeitfahrzeug mit einer Anordnung entsprechend einem Ausführungsbeispiel der Erfindung in einer schematischen, auszugsweisen Darstellung, wobei eine Sicht von innen auf ein Fenster des Freizeitfahrzeugs gezeigt ist;
- Fig. 2: eine Halteelement der in Fig. 1 gezeigten Anordnung in einer schematischen Darstellung, wobei eine Vorderansicht auf das Halteelement gezeigt ist;
- Fig. 3: das in Fig. 2 gezeigte Halteelement, wobei eine Seitenansicht des Halteelements entsprechend der mit III bezeichneten Blickrichtung gezeigt ist; und
- Fig. 4: die in Fig. 1 gezeigte Anordnung mit einem Halteelement und zwei Herausfallschutzelementen entsprechend dem Ausführungsbeispiel in einer auszugsweisen, schematischen, räumlichen Darstellung.

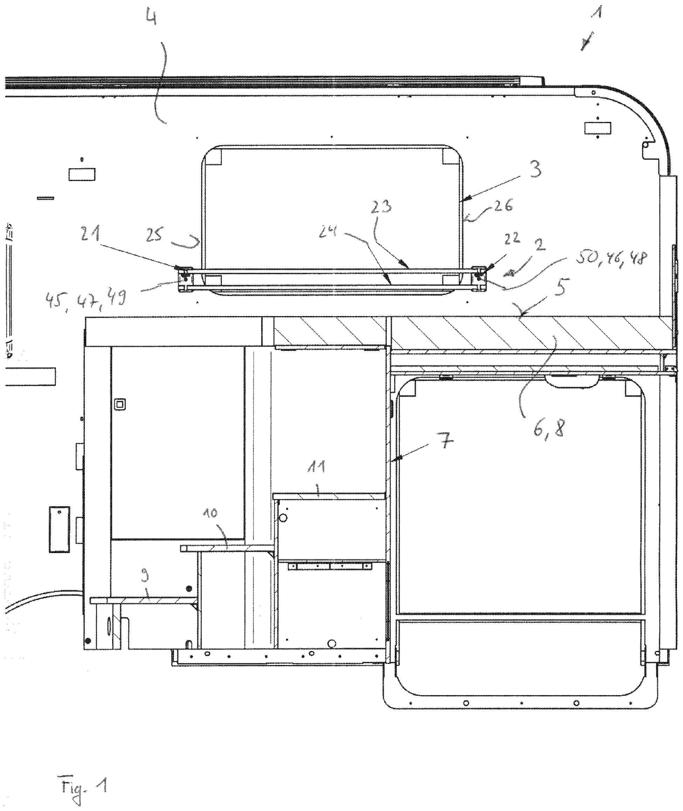

Fig. 1 zeigt ein Freizeitfahrzeug 1 mit einer Anordnung 2 in einer auszugsweisen, schematischen Darstellung entsprechend einem Ausführungsbeispiel. Das Freizeitfahrzeug 1 kann insbesondere als Wohnmobil oder Wohnwagen ausgebildet sein. Die Anordnung 2 eignet sich besonders für solche Freizeitfahrzeuge 1.

Die Anordnung 2 ist an einem Fenster 3 des Freizeitfahrzeugs 1 angebracht. Das Freizeitfahrzeug 1 weist eine Wand 4 auf, wobei in Fig. 1 ein Blick auf die Wand 4 gezeigt ist. An dem Fenster 3 ist eine Aufenthaltsfläche 5 vorgesehen. In diesem Ausführungsbeispiel ist ein Bett 6 an dem Fenster 3 angeordnet, so dass es sich bei der Aufenthaltsfläche 5 um eine Liegefläche 5 handelt. In Bezug auf das Bett 6 ist durch die Anordnung 2 ein Herausfallschutz realisiert.

Das Freizeitfahrzeug 1 weist weitere Elemente auf. Insbesondere ist eine Bettkonstruktion 7 vorgesehen, auf der eine Matratze 8 des Bettes 6 aufliegt. Ferner sind Trittstufen 9, 10, 11 und weitere, nicht gekennzeichnete Elemente, vorgesehen.

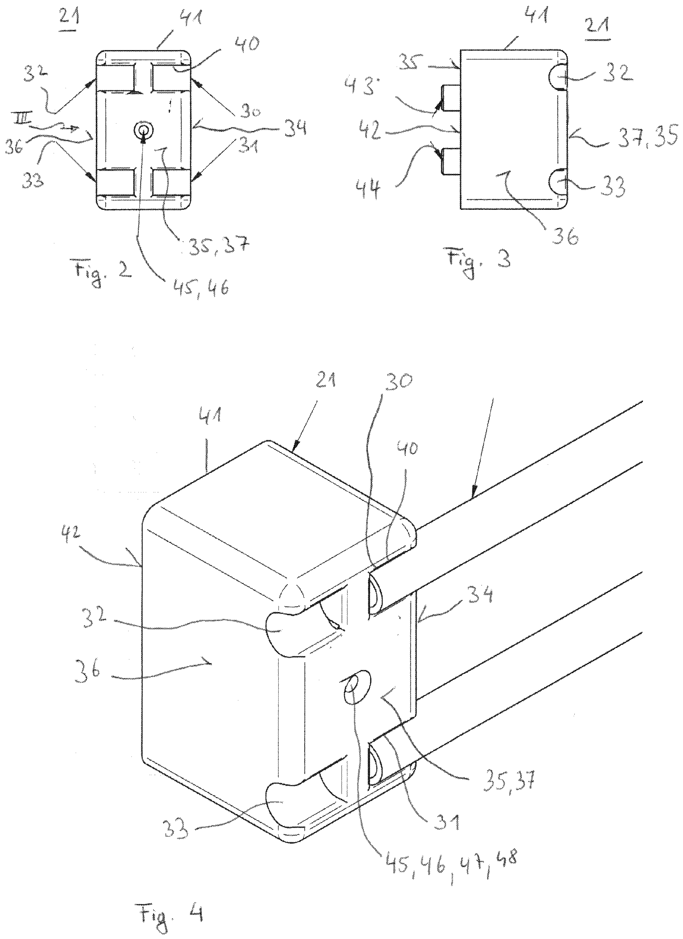

Die Ausgestaltung des in Fig. 1 gezeigten Freizeitfahrzeugs 1 ist im Folgenden auch unter Bezugnahme auf Fig. 2 bis 4 näher beschrieben.

Fig. 2 bis 4 zeigen ein Halteelement 21 der Anordnung 2. Hierbei ist exemplarisch das Halteelement 21 gezeigt, wobei ein zweites Halteelement 22 in entsprechender Weise ausgestaltet ist. Speziell können die Halteelemente 21, 22 gleich ausgestaltet sein.

Fig. 2 zeigt das Halteelement 21 in einer Ansicht von vorne, wobei diese Ansicht der Ansicht in Fig. 1 entspricht. Fig. 3 zeigt das Halteelement 21 in einer Seitenansicht aus der in Fig. 2 mit III bezeichneten Blickrichtung. Fig. 4 zeigt die Anordnung 2 in einer auszugsweisen, räumlichen Darstellung.

Die Anordnung 2 weist das erste Halteelement 21 und das zweite Halteelement 22 auf. Ferner weist die Anordnung 2 Herausfallschutzelemente 23, 24 auf. Die Herausfallschutzelemente 23, 24 sind in Fig. 1 an dem Fenster 3 angeordnet. Die Herausfallschutzelemente 23, 24 sind allerdings entfernbar, wobei die Halteelemente 21, 22 an der Wand 4 des Freizeitfahrzeugs 1 montiert bleiben. Wenn die Herausfallschutzelemente 23, 24 am Fenster 3 angeordnet sind, dann ist durch diese ein Herausfallschutz an dem Fenster 3 realisiert. Hierdurch wird insbesondere beim Schlafen ein Herausfallen aus dem Fenster 3 im geöffneten Zustand verhindert.

Das erste Halteelement 21 ist an einer ersten Seite 25 des Fensters 3 angeordnet und mit der Wand 4 verbunden. Entsprechend ist das zweite Halteelement 22 an der zweiten Seite 26 des Fensters 3 angeordnet und mit der Wand 4 verbunden. Die Seiten 25, 26 des Fensters 3 liegen einander gegenüber. Die Halteelemente 21, 22 dienen zum Halten der Herausfallschutzelemente 23, 24, die sich hierbei zumindest von der ersten Seite 25 bis zur zweiten Seite 26 des Fensters 3 erstrecken.

Die Herausfallschutzelemente 23, 24 sind in diesem Ausführungsbeispiel stangenförmig ausgebildet. Ferner sind in diesem Ausführungsbeispiel zwei Herausfallschutzelemente 23, 24 vorgesehen. Je nach Ausgestaltung der Anordnung 2 kann aber auch nur ein einziges Herausfallschutzelement 23 vorgesehen sein oder es können auch mehr als zwei Herausfallschutzelemente 23, 24 vorgesehen sein. Vorzugsweise sind solche Herausfallschutzelemente 23, 24 biegesteif ausgebildet. Ferner sind die Herausfallschutzelemente 23, 24 vorzugsweise sich entsprechend ausgebildet, wobei diese von einem Profil abgelängt sein können.

Zum Halten der Herausfallschutzelemente 23, 24 sind an den Halteelementen Ausnehmungen 30, 31, 32, 33 vorgesehen. Hierbei sind die Herausfallschutzelemente 23, 24 in die Ausnehmungen 30, 31, 32, 33 einsclipsbar. Dadurch kann ein Benutzer in einfacher Weise die Herausfallschutzelemente 23, 24 an dem Fenster 3 anbringen und entfernen.

Die Ausnehmungen 30, 31 des ersten Halteelements 21 sind sowohl an einer dem Fenster 3 zugewandten Seite 34 des ersten Halteelements 21 als auch an einer von der Wand 4 abgewandten Seite 35 des ersten Halteelements 21 geöffnet. Das zweite Halteelement 22 ist vorzugsweise identisch zu dem ersten Halteelement 21 ausgebildet. Bei dem zweiten Halteelement 22 sind dann Ausnehmungen 32, 33 an der dem Fenster 3 zugewandten Seite 36 und der von der Wand 4 abgewandten Seite 37 geöffnet. Die Ausnehmungen 30, 31, 32, 33 sind in diesem Ausführungsbeispiel durch eine Verschneidungsform 40 realisiert, die auf einer Sacklochbohrung basiert. Die Halteelemente 21, 22 basieren hierbei auf einer quaderförmigen Grundform 41. Hierbei sind in diesem Ausführungsbeispiel abgerundete Ecken und Kanten vorgesehen.

Das erste Halteelement 21 weist eine der Wand 4 zugewandte Befestigungsseite 42 auf. An der Befestigungsseite 42 sind als Spreizdübel ausgestaltete Befestigungselemente 43, 44 vorgesehen. Das zweite Halteelement 22 weist in entsprechender Weise eine Befestigungsseite 42 auf. Ferner weisen die Halteelemente 21, 22 Durchgangsbohrungen 45, 46 auf, an denen Anschraubpunkte 47, 48 vorgegeben sind. Über Schrauben 49, 50 erfolgt jeweils eine Befestigung an der Wand 4. Bei der Herstellung können eine Vielzahl von Halteelementen 21, 22 in identischer Weise hergestellt werden. Insbesondere können solche Halteelemente 21, 22 als Spritzgussteil realisiert werden. Hierbei können die Halteelemente 21, 22 auch werkzeugfallend ausgebildet sein. Dadurch sind geringe Herstellungskosten und ein geringes Gewicht realisierbar.

Die Erfindung ist nicht auf die beschriebenen Ausführungsformen beschränkt.

## Patentansprüche

1. Anordnung (2) für ein Freizeitfahrzeug (1), insbesondere ein Wohnmobil oder einen Wohnwagen, mit zumindest einem Herausfallschutzelement (23, 24), das entfernbar an einem Fenster (3) des Freizeitfahrzeugs (1) anordenbar ist, wobei das zumindest eine Herausfallschutzelement (23, 24) so ausgestaltet ist, dass in an dem Fenster (3) angeordneten Zustand ein Herausfallschutz an dem Fenster (3) realisiert ist,
wobei ein erstes Halteelement (21) und zumindest ein zweites Halteelement (22) vorgesehen sind, wobei das erste Halteelement (21) im montierten Zustand neben einer ersten Seite (25) des Fensters (3) an einer Wand (4) des Freizeitfahrzeugs (1) befestigt ist, wobei das zweite Halteelement (22) im montierten Zustand an einer der ersten Seite (25) des Fensters (3) gegenüberliegenden zweiten Seite (26) des Fensters (3) an einer Wand (4) des Freizeitfahrzeugs (1) befestigt ist und wobei zumindest ein Herausfallschutzelement (23, 24) im an dem Fenster (3) angeordneten Zustand durch das erste Halteelement (21) und das zweite Halteelement (22) gehalten ist,
**dadurch gekennzeichnet,**
**dass** das erste Halteelement (21) zumindest eine Ausnehmung (30, 31) aufweist, in die das zumindest eine Herausfallschutzelement (23, 24) einclipsbar ist und/oder
**dass** das zweite Halteelement (22) zumindest eine Ausnehmung (32, 33) aufweist, in die das zumindest eine Herausfallschutzelement (23, 24) einclipsbar ist und
**dass** die Ausnehmung (30, 31) des ersten Halteelements (21) im montierten Zustand des ersten Halteelements (21) zumindest an einer dem Fenster (3) zugewandten Seite (34) des ersten Halteelements (21) und an einer der Wand (4) abgewandten Seite (35) des ersten Halteelements (21) geöffnet ist und/oder dass die Ausnehmung (32, 33) des zweiten Halteelements (22) im montierten Zustand des zweiten Halteelements (22) zumindest an einer dem Fenster (3) zugewandten Seite (36) des zweiten Halteelements (22) und an einer der Wand (4) abgewandten Seite (35) des zweiten Halteelements (22) geöffnet ist.

2. Anordnung nach Anspruch 1,
**dadurch gekennzeichnet,**
**dass** das zumindest eine Herausfallschutzelement (23, 24) als zumindest im Wesentlichen stangenförmiges Herausfallschutzelement (23, 24) ausgebildet ist und/oder dass zumindest zwei Herausfallschutzelemente (23, 24) vorgesehen sind und/oder dass das zumindest eine Herausfallschutzelement (23, 24) als zumindest im Wesentlichen biegesteifes Herausfallschutzelement (23, 24) ausgebildet ist.

3. Anordnung nach einem der Ansprüche 1 oder 2,
**dadurch gekennzeichnet,**
**dass** die zumindest eine Ausnehmung (30, 31, 32, 33) auf einer zumindest im Wesentlichen als Bohrung, insbesondere Sacklochbohrung, ausgestalteten Verschneidungsform (40) basiert.

4. Anordnung nach einem der Ansprüche 1 bis 3,
**dadurch gekennzeichnet,**
**dass** das erste Halteelement (21) auf einer quaderförmigen Grundform (41) basiert und/oder dass das zweite Halteelement (22) auf einer quaderförmigen Grundform (41) basiert.

5. Anordnung nach einem der Ansprüche 1 bis 4,
**dadurch gekennzeichnet,**
**dass** das erste Halteelement (21) eine im montierten Zustand des ersten Halteelements (21) der Wand (4) zugewandte Befestigungsseite (42) aufweist und dass das erste Halteelement (21) zur Montage an der Wand (4) an der Befestigungsseite (42) zumindest ein Befestigungselement (43, 44), insbesondere einen Spreizdübel, aufweist und/oder dass das zweite Halteelement (22) eine im montierten Zustand des zweiten Halteelements (22) der Wand (4) zugewandte Befestigungsseite (42) aufweist und dass das zweite Halteelement (22) zur Montage an der Wand (4) an der Befestigungsseite (42) zumindest ein Befestigungselement (43, 44), insbesondere einen Spreizdübel, aufweist.

6. Anordnung nach einem der Ansprüche 1 bis 5,
**dadurch gekennzeichnet,**
**dass** das erste Halteelement (21) zumindest eine Durchgangsbohrung (45) aufweist, die sich im montierten Zustand des ersten Halteelements (21) von einer der Wand (4) abgewandten Seite (35) des ersten Halteelements (21) zu einer der Wand (4) zugewandten Seite (42) des ersten Halteelements (21) erstreckt und/oder dass das zweite Halteelement (22) zumindest eine Durchgangsbohrung (46) aufweist die sich im montierten Zustand des zweiten Halteelements (22) von einer der Wand (4) abgewandten Seite (37) des zweiten Halteelements (22) zu einer der Wand (4) zugewandten Seite (42) des zweiten Halteelements (22) erstreckt.

7. Anordnung nach einem der Ansprüche 1 bis 6,
**dadurch gekennzeichnet,**
**dass** das erste Halteelement (21) als Spritzgussteil und/oder als werkzeugfallendes Teil ausgebildet ist und/oder dass das zweite Halteelement (22) als Spritzgussteil und/oder als werkzeugfallendes Teil ausgebildet ist.

8. Freizeitfahrzeug (1), insbesondere Wohnmobil oder Wohnwagen, mit zumindest einer Anordnung (2) nach einem der Ansprüche 1 bis 7.

9. Freizeitfahrzeug nach Anspruch 8,
**dadurch gekennzeichnet,**
**dass** eine Aufenthaltsfläche (5), insbesondere eine Liegefläche, an dem Fenster (3) vorgesehen ist, an dem das zumindest eine Herausfallschutzelement (23, 24) der Anordnung (2) entfernbar anordenbar ist.

## Claims

1. Arrangement (2) for a recreational vehicle (1), in particular a motorhome or a caravan, with at least one fall protection element (23, 24) that can be removably arranged at a window (3) of the recreational vehicle (1), wherein the at least one fall protection element (23, 24) is designed such that, when arranged at the window (3), a fall protection is realised at the window (3), wherein a first retaining element (21) and at least one second retaining element (22) are provided, wherein the first retaining element (21) is fastened at a wall (4) of the recreational vehicle (1) in a mounted state next to a first side (25) of the window (3), wherein the second retaining element (22) is fastened at a wall (4) of the recreational vehicle (1) in a mounted state at a second side (26) of the window (3) opposite the first side (25) of the window (3), and wherein at least one fall protection element (23, 24) is held by the first retaining element (21) and the second retaining element (22) when arranged at the window (3),
**characterised in that**
the first retaining element (21) has at least one recess (30, 31) into which at least one fall protection element (23, 24) can be clipped and/or that the second retaining element (22) has at least one recess (32, 33) into which at least one fall protection element (23, 24) can be clipped, and that the recess (30, 31) of the first retaining element (21) is open in the assembled state of the first retaining element (21) at least at a side (34) of the first retaining element (21) facing the window (3) and at a side (35) of the first retaining element (21) facing away from the wall (4), and/or that the recess (32, 33) of the second retaining element (22) is open in the assembled state of the second retaining element (22) at least at one side (36) of the second retaining element (22) facing the window (3) and at one side (35) of the second retaining element (22) facing away from the wall (4).

2. Arrangement according to claim 1,
**characterised in that**
the at least one fall protection element (23, 24) is designed as an at least substantially rod-shaped fall protection element (23, 24) and/or that at least two fall protection element (23, 24) are provided and/or that the at least one fall protection element (23, 24) is designed as an at least substantially rigid fall protection element (23, 24).

3. Arrangement according to any one of claims 1 or 2,
**characterised in that**
the at least one recess (30, 31, 32, 33) is based on a cross-cut form (40) designed at least substantially as a bore, in particular a blind bore.

4. Arrangement according to any one of claims 1 to 3,
**characterised in that**
the first retaining element (21) is based on a cuboid base shape (41) and/or **in that** the second retaining element (22) is based on a cuboid base shape (41).

5. Arrangement according to any one of claims 1 to 4,
**characterised in that**
the first retaining element (21) has a fastening side (42) facing the wall (4) when the first retaining element (21) is in the assembled state, and that the first retaining element (21) has at least one fastening element (43, 44), in particular an expansion dowel, for mounting at the wall (4) and/or that the second retaining element (22) has a fastening side (42) facing the wall (4) when the second retaining element (22) is in the assembled state, and that the second retaining element (22) has at least one fastening element (43, 44), in particular an expansion dowel, for mounting at the wall (4).

6. Arrangement according to any one of claims 1 to 5,
**characterised in that**
the first retaining element (21) has at least one through hole (45) which, when the first retaining element (21) is in the assembled state, extends from a side (35) of the first retaining element (21) facing away from the wall (4) to a side (42) of the first retaining element (21) facing the wall (4) and/or that the second retaining element (22) has at least one through hole (46) which, when the second retaining element (22) is in the assembled state, extends from a side (37) of the second retaining element (22) facing away from the wall (4) to a side (42) of the second retaining element (22) facing the wall (4).

7. Arrangement according to any one of claims 1 to 6,
**characterised in that**
the first retaining element (21) is designed as an injection-moulded part and/or as a tool-free part and/or that the second retaining element (22) is designed as an injection-moulded part and/or as a tool-free part.

8. Recreational vehicle (1), in particular a motorhome or caravan, with at least one arrangement (2) according to any one of claims 1 to 7.

9. Recreational vehicle according to claim 8,
**characterised in that**
a living area (5), in particular a reclining area, is provided at the window (3) at which the at least one fall protection element (23, 24) of the arrangement (2) can be removably arranged.

## Revendications

1. Agencement (2) destiné à un véhicule de loisirs (1), en particulier un camping-car ou une caravane, comprenant au moins un élément de protection anti-chute (23, 24) qui peut être agencé de manière amovible au niveau d'une fenêtre (3) du véhicule de loisirs (1), dans lequel ledit au moins un élément de protection anti-chute (23, 24) est conçu de telle sorte que, dans un état agencé au niveau de la fenêtre (3), une protection anti-chute est réalisée au niveau de la fenêtre (3),
dans lequel il est prévu un premier élément de maintien (21) et au moins un second élément de maintien (22), dans lequel le premier élément de maintien (21), dans l'état monté, est fixé au niveau d'une paroi (4) du véhicule de loisirs (1) à côté d'un premier côté (25) de la fenêtre (3), dans lequel le second élément de maintien (22), dans l'état monté, est fixé au niveau d'une paroi (4) du véhicule de loisirs (1) au niveau d'un second côté (26) de la fenêtre (3) opposé au premier côté (25) de la fenêtre (3), et dans lequel au moins un élément de protection anti-chute (23, 24), dans un état agencé au niveau de la fenêtre (3), est maintenu par le premier élément de maintien (21) et le second élément de maintien (22),
**caractérisé en ce que**
le premier élément de maintien (21) présente au moins un évidement (30, 31) dans lequel au moins un élément de protection anti-chute (23, 24) peut être clipsé et/ou **en ce que** le second élément de maintien (22) présente au moins un évidement (32, 33) dans lequel au moins un élément de protection anti-chute (23, 24) peut être clipsé, et **en ce que** l'évidement (30, 31) du premier élément de maintien (21), dans l'état monté du premier élément de maintien (21), est ouvert au moins au niveau d'un côté (34) du premier élément de maintien (21), tourné vers la fenêtre (3), et d'un côté (35) du premier élément de maintien (21), détourné de la paroi (4), et/ou **en ce que** l'évidement (32, 33) du second élément de maintien (22), dans l'état monté du second élément de maintien (22), est ouvert au moins au niveau d'un côté (36) du second élément de maintien (22), tourné vers la fenêtre (3), et d'un côté (35) du second élément de maintenu (22), détourné de la paroi (4).

2. Agencement selon la revendication 1,
**caractérisé en ce que**
ledit au moins un élément de protection anti-chute (23, 24) est réalisé au moins sensiblement comme élément de protection anti-chute (23, 24) sous forme de barres, et/ou **en ce qu'**il est prévu au moins deux éléments de protection anti-chute (23, 24), et/ou **en ce que** ledit au moins un élément de protection anti-chute (23, 24) est réalisé au moins sensiblement sous forme d'élément de protection anti-chute (23, 24) rigide en flexion.

3. Agencement selon l'une quelconque des revendications 1 ou 2,
**caractérisé en ce que**
ledit au moins un évidement (30, 31, 32, 33) est basé sur une forme de coupe (40) conçue au moins sensiblement comme alésage, en particulier comme alésage à trou borgne.

4. Agencement selon l'une quelconque des revendications 1 à 3,
**caractérisé en ce que**
le premier élément de maintien (21) est basé sur une forme de base parallélépipédique (41) et/ou **en ce que** le second élément de maintien (22) est basé sur une forme de base parallélépipédique (41).

5. Agencement selon l'une quelconque des revendications 1 à 4,
**caractérisé en ce que**
le premier élément de maintien (21) présente, dans l'état monté du premier élément de maintien (21), un côté de fixation (42) tourné vers la paroi (4) et **en ce que** le premier élément de maintien (21) présente au moins un élément de fixation (43, 44), en particulier une cheville expansible, au niveau du côté de fixation (42) pour le montage au niveau d'une paroi (4), et/ou **en ce que** le second élément de maintien (22) présente, dans l'état monté du second élément de maintien (22), un côté de fixation (42) tourné vers la paroi (4) et **en ce que** le second élément de maintien (22) présente au moins un élément de fixation (42, 44), en particulier une cheville expansible, au niveau du côté de fixation (42) pour le montage au niveau de la paroi (4).

6. Agencement selon l'une des revendications 1 à 5,
**caractérisé en ce que** le premier élément de maintien (21) présente un alésage traversant (45) qui, dans l'état monté du premier élément de maintien (21), s'étend depuis un côté (35) du premier élément de maintien (21), détourné de la paroi (4), jusqu'à un côté (42) du premier élément de maintien (21), détourné de la paroi (4), et/ou **en ce que** le second élément de maintien (22) présente au moins un alésage traversant (46) qui, dans l'état monté du second élément de maintien (22), s'étend depuis un côté (37) du second élément de maintenu (22), détourné de la paroi (4), jusqu'à un côté (42) sont du second élément de maintien (22), tourné vers la paroi (34).

7. Agencement selon l'une quelconque des revendications 1 à 6,
**caractérisé en ce que**
le premier élément de maintien (21) est réalisé sous forme de pièce moulée par injection et/ou sous forme de pièce tombant de l'outil.

8. Véhicule de loisirs (1), en particulier camping-car ou caravane, présentant au moins un agencement (2) selon l'une quelconque des revendications 1 à 7.

9. Véhicule de loisirs selon la revendication 8,
**caractérisé en ce que**
il est prévu une surface de séjour (5), en particulier une surface de couchage, au niveau de la fenêtre (3) au niveau de laquelle ledit au moins un élément de protection anti-chute (23, 24) de l'agencement (2) peut être agencé de manière amovible.
